Europäisches Patentamt

European Patent Office

Office européen des brevets

(11) Numéro de publication: **0 590 658 A1**

## (12) DEMANDE DE BREVET EUROPEEN

(21) Numéro de dépôt: 93115773.9

(51) Int. Cl.5: **G01P 15/13**

(22) Date de dépôt: **30.09.93**

(30) Priorité: **02.10.92 CH 3086/92**
**21.10.92 FR 9212691**

(43) Date de publication de la demande:
**06.04.94 Bulletin 94/14**

(84) Etats contractants désignés:
**CH DE ES FR GB IT LI NL**

(71) Demandeur: **CSEM, Centre Suisse**
**d'Electronique et de Microtechnique S.A.**
**Recherche et Développement,**
**Rue de la Maladière 71**
**CH-2007 Neuchâtel(CH)**

(72) Inventeur: **Chevroulet, Michel Alain**
**Avenue du Mail 34**
**CH-2000 Neuchâtel(CH)**
Inventeur: **Smith, Ted**
**Les Pacots 12**
**Ch-2075 Wavre(CH)**

(74) Mandataire: **de Montmollin, Henri et al**
**ICB**
**Ingénieurs Conseils en Brevets SA**
**Passage Max Meuron 6**
**CH-2001 Neuchâtel (CH)**

(54) Dispositif de mesure d'une force.

(57) Le dispositif de mesure d'une force et notamment d'une force d'inertie correspondant à une accélération comprend un capteur capacitif comprenant deux capacités ($C_1$,$C_2$) dont la différence est fonction de la force mesurée.

Le dispositif de mesure comprend également un circuit électronique permettant de générer un signal de sortie déterminé par une opération de comparaison de la valeur des deux capacités. Ce signal est généré sous la forme d'un signal numérique modulé en densité d'impulsions.

Fig. 4

EP 0 590 658 A1

La présente invention concerne un dispositif de mesure d'une force telle que par exemple une force d'inertie correspondant à une accélération du dispositif.

Plus précisément, l'invention concerne un tel dispositif de mesure dans lequel la force mesurée agit sur une lame suspendue élastiquement et formant l'une des armatures de deux capacités.

La présente invention concerne également un capteur capacitif prévu pour fournir un signal en réponse à la force, et également un circuit électronique coopérant avec ledit capteur pour produire une représentation analogique ou numérique du signal de force fourni.

Un accéléromètre de précision basé sur un capteur micro-usiné et associé avec de l'électronique est décrit dans un article de W. Henrion et al. intitulé "Wide Dynamic Range Direct Digital Accelerometer", IEEE Solid-State Sensors and Actuators Workshop, 1990" et également dans le brevet US 5 134 881.

Le dispositif décrit dans ces deux documents antérieurs comprend un capteur dans lequel une masse suspendue élastiquement forme l'armature mobile de deux capacités de détection et de deux capacités de contre-réaction électrostatique. Ladite masse mobile est susceptible d'être soumise à une force que l'on désire mesurer de manière à faire varier la capacité des condensateurs de détection. Le dispositif comprend encore des moyens électroniques pour fournir un signal représentatif de la différence entre les deux capacités de détection. Ce signal est utilisé comme signal de sortie représentatif de la valeur de ladite force et également, en étant fourni aux deux condensateurs de contre-réaction électrostatique, pour créer une force électrostatique capable de compenser la force extérieure agissant sur ladite masse.

Dans cette solution antérieure, le capteur capacitif est caractérisé par le fait que le signal de déplacement est sensiblement proportionnel à l'accélération de la structure de support pour des accélérations de fréquence inférieures à la fréquence de résonance.

Cette solution antérieure est basée sur un capteur capacitif qui comporte des régions distinctes électriquement isolées les unes des autres pour la mesure et pour la génération d'une force électrostatique. De plus, la solution antérieure utilise un générateur de charge pour générer la force électrostatique.

Une autre caractéristique de l'art antérieur est que le dispositif de mesure à sortie numérique est basé sur une force électrostatique binaire.

Une autre caractéristique de ce dispositif à sortie numérique est les moyens d'intégration dans le circuit direct.

Une autre caractéristique de ce dispositif à sortie numérique est un filtre passe-bas dans le circuit direct pour stabiliser la boucle de commande.

Le dispositif décrit par Henrion comprend des solutions utilisables pour des mesures précises d'accélération. Toutefois, il reste trois défauts auxquels il est nécessaire de remédier :

- Premièrement, le capteur capacitif avec réponse en fréquence résonante nécessite un vide interne pour garantir les caractéristiques résonantes. Durant la production, il est coûteux de réaliser un tel vide, et de garantir son maintien pour toute la vie du dispositif. Il est donc préférable d'utiliser un capteur avec une pression interne plus grande, par exemple de l'ordre de quelques millibars, ce qui est moins coûteux à réaliser et plus facile à contrôler. Un tel capteur présentera typiquement une réponse en fréquence amortie.
- Deuxièmement, les moyens d'intégration dans le circuit direct produiront une instabilité de boucle. Le brevet US 5 134 881 ne parle pas de méthodes ou de moyens pour la stabilisation.
- Troisièmement, les distorsions ne sont pas traitées par l'art antérieur, bien que de nombreuses causes physiques ou électriques puissent détériorer de façon considérable la réponse linéaire du dispositif de mesure.

En conséquence, un but de la présente invention est de réaliser un dispositif de mesure précis sensible à un signal de force.

Un autre but est de réaliser un dispositif de mesure de haute précision sensible à un signal de force, et basé sur un capteur à réponse en fréquence amortie.

Un autre but est de réaliser un dispositif de mesure de haute précision sensible à un signal de force, et comprenant des moyens électroniques pour obtenir une faible distorsion. Un autre but de l'invention est de réaliser un dispositif de mesure de haute précision sensible à un signal de force, et fournissant un signal de sortie numérique basé sur une force électrostatique binaire.

Un autre but de la présente invention est de réaliser un dispositif de mesure de haute précision sensible à un signal de force, et fournissant un signal de sortie numérique basé sur une force électrostatique à valeur multiple.

Les buts cités ci-dessus aussi bien que d'autres caractéristiques et avantages de l'invention sont incorporés dans un dispositif de mesure d'une force et notamment d'une force d'inertie correspondant à une accélération, comprenant,

- un capteur capacitif comprenant deux capacités et dans lequel une lame suspendue élastiquement, forme l'armature mobile d'au moins une desdites capacités, ladite lame mobile étant susceptible d'être soumise à ladite force de manière à faire varier au moins une desdites capacités et,

- des moyens de circuits directs comprenant un circuit pour fournir un signal en réponse au déplacement de ladite lame, ledit signal étant employé comme signal de sortie représentatif de la valeur de ladite force,

- des moyens de circuits de rétroaction pour fournir ledit signal de sortie, par l'intermédiaire de moyens de commutations à au moins l'une desdites capacités pour produire une force électrostatique de rétro-action,

caractérisé en ce que lesdits moyens de circuits directs comprennent des moyens pour engendrer ledit signal sous une forme numérique modulée en densité d'impulsions en fonction de ladite force.

Un tel signal modulé en densité d'impulsions est un signal réellement numérique. Il peut donc être fourni sans intermédiaire à un quelconque système de traitement numérique, à condition que les fréquences d'horloges des moyens de modulation en densité d'impulsion et de celles de ladite unité de traitement numérique soient synchronisées. Le signal modulé en densité d'impulsions peut également être fourni à un filtre passe bas semblable à celui décrit dans le document antérieur ci-dessus, pour produire un signal analogique. Finalement si l'horloge qui cadence les moyens de modulation et celles du système de traitement numérique situées en aval ne sont pas synchronisées, on peut utiliser un filtre passe-bas numérique c'est-à-dire un compteur pour transformer directement les impulsions reçues du dispositif de mesure en impulsions utilisables par le système de traitement numérique.

Selon un mode préféré de réalisation de l'invention, le capteur capacitif contient un gaz par exemple de l'air, pour amortir les mouvements de la lame suspendue élastiquement et contribuer ainsi à la stabilité du signal fourni par le dispositif de mesure.

Selon un deuxième mode de réalisation préféré de l'invention, les moyens de circuits directs comprennent des moyens d'intégration disposés en sortie du capteur capacitif. Lesdits moyens d'intégration comprennent au moins un intégrateur, qui augmente le gain basse fréquence. Ce perfectionnement empêche le signal de sortie de présenter des zones mortes autour de la valeur zéro du signal d'entrée, et autour de certaines autres valeurs du signal d'entrée, de façon semblable à ce qui est déjà décrit pour des systèmes purement électriques dans l'article de J.C. Candy et G.C. Temes intitulé "Oversampling Methods for A/D and D/A Converters" dans "Oversampled Delta-Sigma Converters", IEEE Press, pp.1-29, 1992.

Selon une variante avantageuse du deuxième mode de réalisation préféré de l'invention, lesdits moyens d'intégration sont disposés pour recevoir en entrée la somme du signal de sortie et dudit signal engendré sous forme numérique. La fonction de transfert entre l'entrée des moyens d'intégration et la sortie des moyens de circuit direct étant de signe négatif.

Selon un troisième mode de réalisation préféré de l'invention, lesdits moyens pour engendrer ledit signal sous forme numérique comprennent un convertisseur multibits. Ce convertisseur multibits peut être réalisé en utilisant un comparateur analogique-digital parallèle (convertisseur-flash), il peut également être réalisé en utilisant un cascade de convertisseur sigma-delta (voir Candy et Temes). En conséquence, la conversion numérique-analogique dans le circuit de rétroaction électrostatique devra être adaptée au convertisseur analogique-numérique utilisé dans le circuit direct.

Selon un quatrième mode de réalisation préféré de l'invention, lesdits moyens pour engendrer ledit signal sous une forme numérique comprennent un comparateur à un bit. Un filtre passe-bas est, de plus, incorporé dans le circuit de rétroaction électrostatique pour produire une force électrostatique à valeur multiple.

D'autres caractéristiques et avantages de l'invention apparaîtront au cours de la description détaillée qui va suivre de quatre modes de réalisation particuliers de la présente invention donnée uniquement à titre d'exemple et faite en se référant aux dessins annexés, sur lesquels :

- la figure 1 est le schéma de principe d'un dispositif de mesure d'une force selon la présente invention.

- la figure 2 est le schéma électronique d'un premier mode de réalisation d'un dispositif de mesure d'une force conforme à la présente invention,

- la figure 3 décrit sous forme de graphiques l'évolution au cours du temps des tensions électriques mesurées d'une part en neuf emplacements du circuit représenté sur le schéma de la figure 2, et d'autre part sur trois sorties (non représentées) de l'horloge commandant le dispositif,

- la figure 4 est le schéma électronique d'un deuxième mode de réalisation d'un dispositif de mesure d'une force conforme à la présente invention, et

- la figure 5 est le schéma électronique d'un troisième mode de réalisation d'un dispositif de mesure d'une forme conforme à la présente invention comprenant en sortie du capteur capacitif un intégra-

3

teur.

- la figure 6 représente encore un autre mode de réalisation de la présente invention.

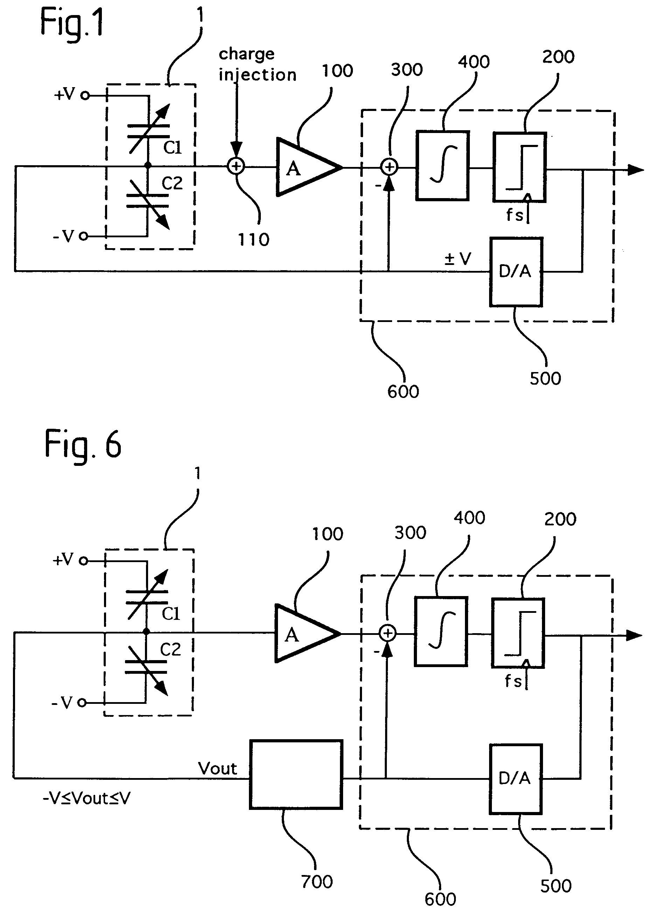

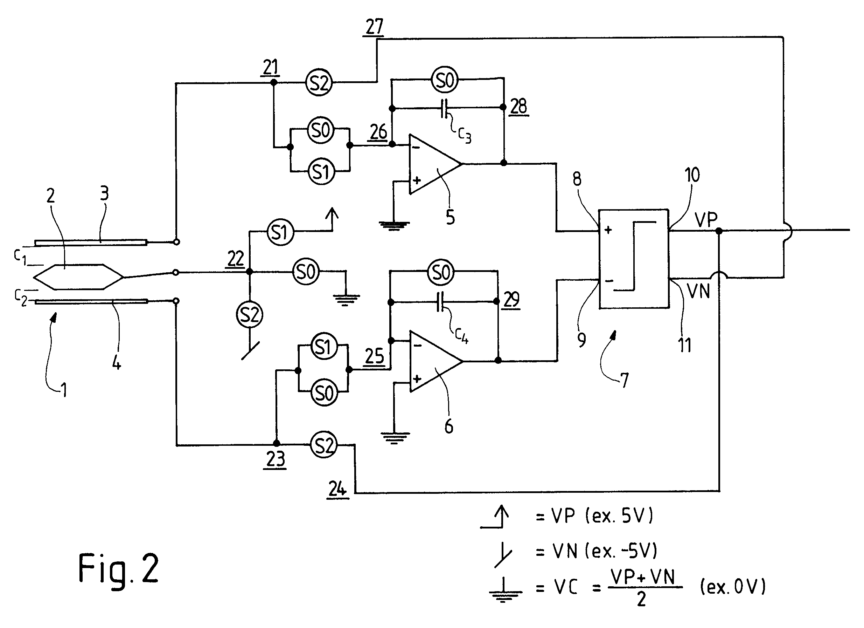

On a représenté sur les figures 1 et 2 le schéma électronique d'un premier mode de réalisation d'un dispositif de mesure d'une force conforme à la présente invention. Le dispositif comprend un capteur capacitif 1 dont le principe est déjà connu de l'homme du métier. Ce capteur comporte une lame conductrice mobile 2 suspendue élastiquement entre deux plaques fixes 3,4. Sous l'effet d'une force extérieure et notamment sous l'effet d'une force d'inertie, la lame conductrice ou électrode mobile 2 peut s'écarter de sa position d'équilibre située à mi-chemin entre les deux plaques ou électrodes fixes 3,4. A l'équilibre, c'est-à-dire en l'absence de forces extérieures, la capacité C1 mesurée entre l'électrode mobile 2 et la première électrode fixe 3 est, dans le présent mode de réalisation, théoriquement égale à la capacité C2 mesurée entre l'électrode mobile 2 et la deuxième électrode fixe 4. Lorsque sous l'effet d'une accélération du système par exemple, l'électrode mobile 2 s'écarte de sa position d'équilibre, la distance qui la sépare d'une des électrodes fixes diminue, alors que la distance qui la sépare de l'autre grandit. Dans ces conditions, la capacité C1 mesurée entre l'électrode mobile et la première électrode fixe va croître alors que l'autre capacité C2 va diminuer. On comprend donc que la différence entre les deux capacités C1, C2 est fonction de l'écart entre la position qu'occupe l'électrode mobile 2 et sa position d'équilibre, et qu'elle est donc fonction également de la force extérieure exercée sur l'électrode mobile 2.

Un signal représentatif de la position de l'électrode mobile est fourni à un circuit 100 fonctionnant comme amplificateur de charge. La sortie du circuit 100 est reliée à un circuit de quantification 200 soit directement, ou éventuellement, par l'intermédiaire d'un circuit de combinaison 300 et de moyens d'intégration 400. La sortie du circuit de quantification 200 qui constitue la sortie du dispositif de mesure d'une force, est reliée à un convertisseur numérique-analogique 500. La sortie de ce convertisseur est reliée à une deuxième entrée dudit circuit de combinaison 300 et également à l'électrode mobile. Cette disposition du circuit de combinaison 300 des moyens d'intégration 400, et des moyens de quantification 200 et du convertisseur numérique-analogique est connue sous le nom de modulateur sigma-delta. La force électrostatique exercée sur l'électrode mobile par l'effet de la différence entre la tension de sortie du convertisseur numérique-analogique et les tensions de référence V+ et V-, est prévue pour compenser exactement la force extérieure appliquée sur ladite électrode mobile. Un inconvénient est que la force produite est modulée par la position de la masse du capteur. Toute déviation permanente de la position d'équilibre, due par exemple à des tolérances de fabrication, produira des distorsions harmoniques d'ordre pair dans le signal de sortie. Une déviation à partir de la position médiane est inévitable dans des réalisations pratiques, puisqu'elle est due au décalage total résultant de la boucle de commande dans son ensemble. Des corrections électroniques locales du décalage sur chacun des blocs fonctionnels dans la boucle résultent dans un système complexe et ne sont pas utilisables pour le calage à zéro du capteur. Il est donc préférable d'avoir des moyens globaux de décalage du zéro. Ceci peut être réaliser de plusieurs manières, qui reviennent toutes ajouter un signal calibré au signal du circuit direct ou au signal du circuit de rétroaction. Une première solution est d'ajouter un nombre calibré de charges aux charges qui sont détectées en sortie du capteur durant la mesure de position de la masse (voir la référence 110 sur la figure 1). Une deuxième solution est d'ajouter un signal calibré en sortie de l'amplificateur de charge 100. Une autre solution est d'ajouter un signal numérique calibré en sortie du circuit de quantification dans le circuit direct. Encore une autre solution est d'ajouter un signal calibré dans le circuit de rétroaction. Il est également possible de rendre le signal calibré dépendant d'un autre signal, par exemple, un signal représentatif de la température.

Le dispositif est, comme on l'a déjà dit, un système numérique cadencé avec une période qui est un multiple de la période d'une horloge non représentée reliée au dispositif.

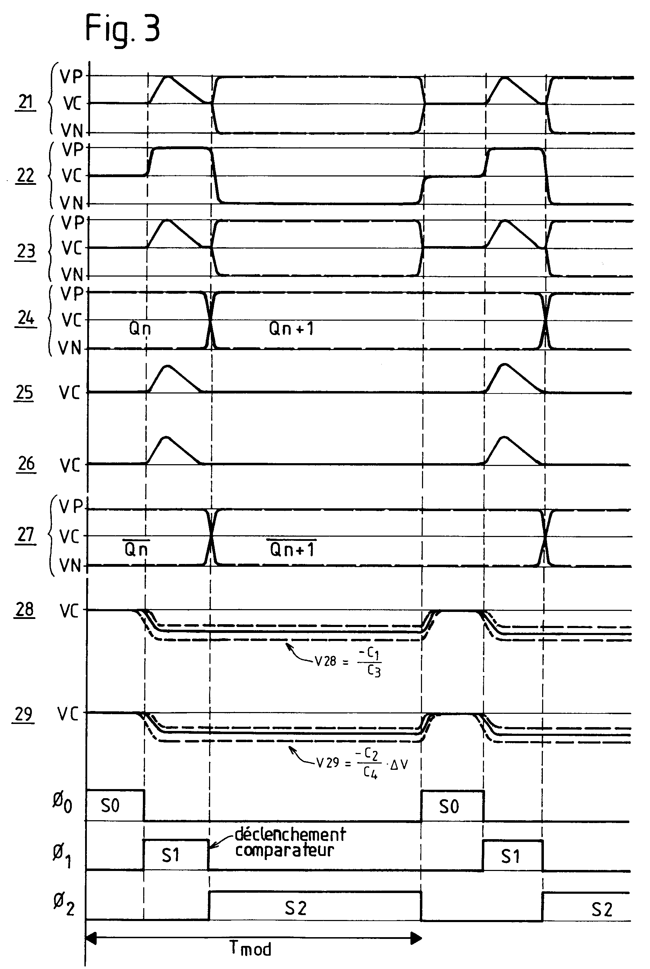

Chaque période ou cycle du fonctionnement du dispositif est divisée en trois phases ou étapes désignées respectivement par S0, S1 et S2, et dont l'enchaînement est commandé par des signaux $\phi 0, \phi 1$ et $\phi 2$ (figure 3) fournis par l'horloge (via des conducteurs non représentés). Ces signaux sont fournis à un certain nombre de commutateurs pour les commander de manière à ce que chacun d'eux soit fermé pendant l'une des trois phases du cycle de fonctionnement et soit ouvert durant les deux autres phases (ces commutateurs sont représentés sur la figure 1 par l'une des indications S0, S1 ou S2 entourée d'un cercle, selon qu'ils sont fermés durant la phase S0, S1 ou S2 respectivement). Bien entendu, en pratique les commutateurs peuvent être formés par des transistors d'un circuit intégré dans lequel est matérialisé le circuit.

La figure 3 comprend douze graphiques représentant l'évolution au cours du temps de douze signaux. Les neuf premiers graphiques décrivent l'évolution au cours du temps des tensions V21, V22, ..., V29 mesurées en neuf points du circuit représenté à la figure 2 (ces neuf points sont référencés sur la figure 2 par des chiffres de 21 à 29. Les trois derniers graphiques de la figure 3 représentent l'évolution au cours du

temps des signaux $\phi 0, \phi 1$ et $\phi 2$ fournis par l'horloge.

Si on examine maintenant parallèlement le schéma du circuit de la figure 2 et l'évolution des tensions V21 à V29, décrites par les graphiques de la figure 3, au cours des différentes phases composant une période de fonctionnement du dispositif, on voit que durant la phase S0, l'électrode mobile 2 est mise à la terre alors que les deux électrodes fixes 3, 4 sont raccordées respectivement à l'entrée inverseuse de chacun des amplificateurs 5 et 6. On voit également que la sortie de chaque amplificateur 5, 6 est court-circuitée avec son entrée inverseuse, et que la deuxième entrée de chaque amplificateur est mise à la masse. Dans ces conditions, le courant et les tensions seront partout nuls dans le circuit ce qui correspond à ce qu'indique la figure 3 où l'on voit que chacune des tensions V21 à V29 est nulle pendant la phase S0.

La phase suivante S1 dans le cycle correspond à la phase de mesure de la position de l'électrode mobile 2. Au début de cette phase S1, tous les commutateurs référencés S0 sont ouverts et les trois commutateurs référencés S1 sont fermés. Dans ces conditions, l'électrode mobile 2 est connectée à une tension d'alimentation positive et se trouve donc placée à un potentiel de références VP. Les deux électrodes fixes 3, 4 sont, comme durant la phase précédente, reliées chacune à l'entrée inverseuse d'un des amplificateurs 5, 6. Durant cette phase S1, la sortie de chaque amplificateur est reliée à son entrée inverseuse par l'intermédiaire d'un condensateur C3, C4. En effet, il n'y a plus de court-circuit puisque le commutateur S0 voisin de chaque condensateur est maintenant ouvert. Avec une telle configuration de connexion, on voit que, conformément à ce qui est décrit dans la figure 2, les plaques 3 et 4 des condensateurs C1 et C2 vont se charger sous l'effet de l'élévation à un potentiel VP de l'électrode mobile 2. La tension qui est responsable du déplacement des charges vers les plaques 3, 4 des condensateurs C1 et C2 va également produire une différence de potentiel entre les deux entrées de chaque amplificateur opérationnel 5, 6. Les amplificateurs vont donc émettre du courant tant que subsistera cette différence de potentiel. Ce courant va charger les condensateurs C3 et C4 jusqu'à ce que la tension entre les entrées des amplificateurs soit à nouveau nulle. A ce moment-là, les tensions V28 et V29 aux sorties des deux amplificateurs 5 et 6 respectivement seront déterminés par les deux relations suivantes :

dV x C1 = V28 x C3
dV x C2 = V29 x C4

Les capacités C3 et C4 étant choisies de valeurs égales, les tensions V28 et V29 mesurées seront proportionnelles respectivement aux capacités C1 et C2. Comme on le voit sur la figure 2, les tensions V28 et V29 aux sorties des amplificateurs 5 et 6 sont fournies aux entrées d'un comparateur 7. Dans le mode de réalisation décrit ici, le comparateur utilisé est un convertisseur analogique/numérique à un bit d'un type bien connu de l'homme du métier.

Au moment du passage de la deuxième phase S1 à la troisième phase S2, le comparateur évalue les niveaux respectifs des signaux qu'il reçoit en entrée et émet par sa sortie directe 10 un signal haut (de niveau VP) si la tension V28 est plus grande que la tension V29 et un signal bas (de niveau Vc) dans le cas inverse. Le comparateur émet simultanément par sa sortie inverse 11 un signal de niveau Vc si la tension V28 est plus grande que la tension V29 et un signal de niveau VN dans le cas inverse. Le signal fourni par le comparateur 7 constitue d'une part le signal utile en sortie du dispositif, et d'autre part sert à générer une force électrostatique durant la troisième phase S2 de chaque période de fonctionnement du dispositif, pour ramener l'électrode mobile 2 constituant l'une des armatures de chacune des capacités C1 et C2, dans sa position de repos dans laquelle les capacités C1 et C2 ont des valeurs égales.

La troisième phase S2 du cycle de fonctionnement du dispositif est comme on vient de le dire une phase de compensation des forces externes exercées sur la lame mobile 2. Les commutateurs référencés S1 qui étaient fermés durant la phase précédente sont maintenant ouverts et trois commutateurs référencés S2 sont maintenant fermés. Avec cette configuration des connexions du circuit, l'électrode mobile 2 se trouve placée à une tension de référence négative VN alors que l'électrode fixe 3 de la capacité C1 est relié à la sortie inverse 11 du comparateur 7 et que l'électrode fixe 4 de la capacité C2 est reliée à la sortie principale 10 du comparateur. Dans ces conditions lors du passage de la phase S1 à la phase S2, si la valeur de la capacité C1 mesurée, est par exemple plus grande que la valeur de la capacité C2, l'électrode fixe 3 de la capacité C1 sera placée au potentiel VN alors que l'électrode fixe 4 de la capacité C2 sera placée au potentiel VP. Le champ électrique entre les électrodes 2 et 3 toutes deux au potentiel VN sera donc nul alors que la plaque 4 du condensateur C2 étant au potentiel VP, elle exercera une force d'attraction sur l'électrode mobile 2. Cette force tendera à faire augmenter la distance entre les électrodes 2 et 3 et diminuer la distance entre les électrodes 2 et 4 et donc à égaliser ces distances et simultanément à égaliser les valeurs des capacités qui leur sont liées. Lorsqu'une force extérieure écarte la lame 2 de sa position d'équilibre la force électrostatique qui vient d'être décrite constituera une force de rappel qui s'ajoutera à la force de rappel élastique du capteur. La constante de rappel K tendant à ramener l'électrode mobile du capteur capacitif vers sa position d'équilibre comprendra donc une composante mécanique et une composante électronique, cette deuxième composante pouvant être beaucoup plus grande que la première.

Lors de la troisième phase S2 de chacun des cycles du dispositif, la lame mobile 2 du capteur capacitif est soumise à une force électrostatique dans un sens ou dans l'autre, même si le dispositif ne mesure aucune force extérieure dont l'effet doit être compensé. La raison de ceci est que le comparateur fournit lors de chaque cycle un signal soit haut soit bas et qu'il produit donc nécessairement à chaque cycle également une force électrostatique de rappel sur la lame mobile 2. L'effet parasite de cette force de rappel en l'absence d'une force extérieure à compenser sera annulé au cycle suivant lorsque le comparateur fournira une tension produisant une force en sens inverse. En l'absence de force extérieure, le capteur émet donc un signal rectangulaire qui est haut exactement une période sur deux.

Dans le mode de réalisation de la présente invention décrit ci-dessus, la mesure de la position de l'électrode mobile est effectuée en plaçant celle-ci à un potentiel donné, puis en mesurant la quantité de charges qui viennent s'accumuler dans les deux électrodes fixes sous l'effet de la tension ainsi produite entre celles-ci et l'électrode mobile. Dans ces conditions, la mesure de la position est dite mesure de la position à tension constante. On peut de façon équivalente réaliser une mesure de la position à charges constantes. A cet effet, on interdit toute circulation de courant électrique à partir de ou vers les électrodes fixes, et on mesure le potentiel de celles-ci par rapport à la terre.

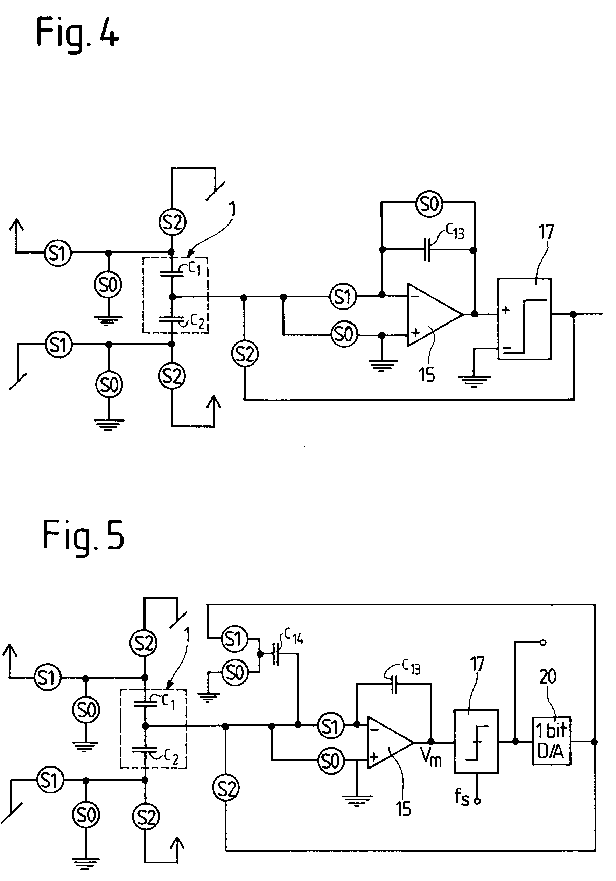

Le circuit électrique représenté par le schéma de la figure 4 correspond à un autre mode de réalisation de la présente invention. Le capteur capacitif 1 utilisé dans ce deuxième mode de réalisation, peut être identique à celui utilisé avec le premier mode de réalisation. Toutefois, pour mesurer la position de l'électrode mobile, au lieu de mettre celle-ci à un potentiel de référence donné, puis de mesurer le nombre de charges qui viennent s'accumuler dans les électrodes fixes, on met les deux électrodes fixes à des potentiels de référence donnés qui sont de signes opposés, et on mesure la quantité de charge qui vient s'accumuler dans l'électrode mobile. Le principe de fonctionnement du circuit électronique lui-même est très semblable à celui du circuit de la figure 2. En particulier, la tension que l'on pourrait mesurer à la base de l'électrode mobile, a un comportement qualitativement identique aux comportements des tensions décrits par les graphiques 21 et 23 (figure 3). La seule différence étant qu'ici, la tension peut être soit négative soit positive suivant que l'électrode mobile s'est écartée de sa position en direction respectivement de la première ou de la deuxième électrode fixe. De plus, la tension qu'on pourrait mesurer en sortie de l'amplificateur 15 a un comportement qualitativement identique aux tensions représentées par les graphiques 28 et 29 (figure 3) sauf en ce qui concerne le signe de la tension, celle-ci pouvant être également positive ou négative suivant que la capacité C1 est plus grande que la capacité C2 ou que l'inverse est vrai. Si on désigne par VM la tension fournie à l'entrée du comparateur à la fin de la phase S1, un raisonnement identique à celui effectué pour les tensions représentées par les graphiques 28, 29 donnent la relation suivante :

$$VM = \frac{C1 - C2}{C13} (VP - VC)$$

le sous-bloc du schéma électrique de la figure 4 qui est constitué par l'amplificateur 15, la capacité C13 et les conducteurs qui leurs sont associés, constitue un intégrateur. Si le cycle de fonctionnement du dispositif ne comprenait pas une phase S0 pendant laquelle les deux bornes du condensateur C13 sont court-circuitées, la tension auxdites bornes pourrait croître de façon illimitée et donc entraîner la saturation du dispositif. L'utilisation d'un commutateur (S0) pour court-circuiter les bornes du condensateur C13 présente toutefois un inconvénient. En effet, le gain de l'amplificateur 15 et la valeur de la capacité 13 étant sélectionnés de façon à éliminer tout risque de saturation pendant la durée d'une phase S1 même en présence d'une accélération relativement importante, la tension produite en sortie de l'intégrateur à la fin d'une phase S1 sera très petite lorsque l'accélération mesurée est petite. Dans ces conditions, le système dans son ensemble risque de ne pas présenter une sensibilité suffisante pour détecter cette accélération très petite. On observera donc dans ce cas un seuil de sensibilité du dispositif en-dessous duquel les accélérations ne sont pas suffisantes pour être mesurées. Un tel seuil peut être gênant dans certaines applications.

Le mode de réalisation de la présente invention décrit par le schéma électrique de la figure 5 ne présente pas l'inconvénient qui vient d'être décrit. En comparant ce schéma avec celui de la figure 4, on constate que le commutateur (S0) servant à court-circuiter les bornes de la capacité C13 durant la phase S0 a été supprimé. Pour empêcher tout de même la saturation de l'intégrateur, une ligne de rétroaction négative supplémentaire a été ajoutée partant de la sortie du comparateur et agissant sur l'entrée inverseuse de l'amplificateur 15. Cette boucle de rétroaction comprend une paire de commutateurs SO, S1 et une capacité C14 ou alternativement, cette combinaison d'une capacité et de deux commutateurs pourra, conformément à ce qui est bien connu de l'homme du métier, être remplacée par une résistance. On voit encore sur la figure 4 que la boucle de rétroaction comprend, en plus, un convertisseur numérique/analogique 20. La présence de cet élément est facultative dans le mode de réalisation décrit ici; en effet, le signal en sortie dudit élément sera en principe identique à celui reçu en entrée, mise à part un éventuel effet d'amplification. Toutefois, la présence du convertisseur numérique/analogique est nécessaire dès le moment où l'on se trouve en présence d'une deuxième variante du présent mode de réalisation dans laquelle le comparateur à un bit est remplacé par un convertisseur analogique/numérique multi-bits conformément à ce qui va être décrit un peu plus loin.

Quelle que soit la variante du mode de réalisation qui nous concerne, on peut aisément calculer le changement dans le niveau de la tension VM fournie à l'entrée du comparateur 17, qui correspond également à la tension aux bornes de la capacité C13, entre un cycle du dispositif et le suivant. Cette variation $\Delta$VM de la tension VM dépendra ici de la tension VA fournie par le comparateur 17 ou, le cas échéant, par le convertisseur numérique/analogique 20. La variation de la tension VM est donnée par :

$$\Delta VM = \frac{C1 - C2}{C13} (VP - VC) - \frac{C14}{C13} VA$$

Le terme de rétroaction (le plus à droite dans la relation mathématique ci-dessus) empêche la saturation de l'intégrateur. Des essais réalisés sur des prototypes ont montré que le circuit qui vient d'être décrit élimine le seuil de sensibilité autour de 0 qui constituait un défaut des modes de réalisation décrits plus haut.

Une autre caractéristique avantageuse que peut présenter un dispositif de mesure d'une force selon l'invention est comme nous venons de le mentionner constituée par l'utilisation d'un convertisseur multi-bits 17 à la place du comparateur 17 à un bit décrit plus haut. Un tel comparateur multi-bits est un dispositif bien connu de l'homme du métier, toutefois son utilisation dans un dispositif de mesure d'une force selon la présente invention présente des avantages tout-à-fait remarquables. L'avantage principal lié à l'utilisation d'un convertisseur multi-bits est relatif à la détermination de la force électrostatique destinée à compenser les forces extérieures s'exerçant sur l'électrode mobile. Lorsque le système utilise un comparateur à un bit, la force électrostatique de contre-réaction aura à chaque cycle une intensité égale, seul le sens de celle-ci étant déterminée par le comparateur à chaque cycle. Dans ces conditions, le système doit nécessairement, pour maintenir l'électrode mobile dans le voisinage de sa position d'équilibre, fonctionner à une fréquence très élevée. La force électrostatique générée dans le capteur fournissant à chaque cycle un travail, la consommation en énergie du dispositif est considérable, cette consommation est de plus pratiquement proportionnelle à la fréquence de l'horloge. L'utilisation d'un convertisseur fournissant en sortie un signal multi-bits permet de générer un signal de contre-réaction électrostatique dont la réponse est adaptée au degré d'écartement de l'électrode mobile par rapport à sa position d'équilibre. Grâce à cette contre-réaction modulable en fonction des besoins, la stabilité du système peut être assurée même avec un dispositif dont la fréquence de fonctionnement est beaucoup plus faible que celle nécessaire dans un système à un bit. L'utilisation d'une fréquence plus faible résulte donc dans une économie d'énergie considérable.

L'utilisation d'un convertisseur multi-bits présente également l'avantage d'abaisser le seuil de sensibilité auquel on a fait référence plus haut. Précisons encore que si nous avons parlé de l'utilisation d'un convertiseur multi-bits en relation avec la figure 5 ce perfectionnement ne se limite nullement au mode de réalisation décrit par cette figure.

Le schéma du fonctionnement du dispositif de mesure d'une force conforme à la présente invention est topologiquement tout-à-fait semblable au schéma d'un convertisseur sigma-delta de deuxième ordre, ou autrement dit d'un convertisseur sigma-delta dont la boucle comprend deux intégrations. Dans le dispositif selon la présente invention la première intégration est effectuée mécaniquement par le capteur lui-même alors que la deuxième intégration est effectuée par l'intégrateur électronique. Le capteur capacitif 1 effectue déjà en théorie deux intégrations mais, par la présence entre les plaques du capteur capacitif d'air ou d'un autre gaz, on produit un amortissement considérable du mouvement. Le fort amortissement du système

EP 0 590 658 A1

supprime un des pôles de la boucle. Cette analogie avec un convertisseur sigma-delta permet de considérer un dispositif de mesure d'une force conforme à la présente invention comprenant un comparateur à un bit, comme étant un convertisseur sigma-delta de deuxième ordre fortement suréchantillonné (par rapport à la bande passante), alors qu'un dispositif de mesure d'une force conforme à la présente invention comprenant un convertisseur multi-bits correspond simplement à un convertisseur sigma-delta de deuxième ordre suréchantillonné.

Le codage binaire de la force électrostatique présente un inconvénient du point de vue de la dissipation d'énergie. L'application des signaux de force binaires implique un cycle de charge et de décharge du capteur capacitif de fréquence élevée par rapport à la fréquence du signal. En moyenne, toutefois, le nombre résultant de charge fournie au capteur est en général faible. La solution est de réduire la fréquence d'échantillonnage tout en maintenant une haute résolution pour la force électrostatique. En conséquence, il est nécessaire de fournir une force à valeur multiple. Ceci peut être réalisé de deux manières. La première méthode est basée sur l'idée de quantifier le signal de sortie du circuit direct à l'aide d'un convertisseur analogique-numérique multibits. La valeur de la force électrostatique est ensuite déterminée par la conversion du signal multibits en un signal analogique à valeur multiple.

La deuxième méthode est basée sur un signal de sortie codé de façon binaire qui est passé dans un filtre passe-bas 700 dans le circuit de rétroaction (voir figure 6). La fréquence de coupure du fil passe-bas étant choisie en dessous de la fréquence d'échantillonnage mais en dessus de la fréquence la plus haute fournie en entrée.

## Revendications

1.  Dispositif de mesure d'une force et notamment d'une force d'inertie correspondant à une accélération, comprenant,

    - un capteur capacitif (1) comprenant deux capacités (C1,C2) et dans lequel une lame (2) suspendue élastiquement, forme l'armature mobile d'au moins une desdites capacités (C1,C2), ladite lame (2) mobile étant susceptible d'être soumise à ladite force de manière à faire varier au moins une desdites capacités (C1,C2) et
    - des moyens de circuits directs (5,6,7) comprenant un circuit pour fournir un signal (24) en réponse au déplacement de ladite lame, ledit signal étant employé comme signal de sortie représentatif de la valeur de ladite force,
    - des moyens de circuits de rétroaction pour fournir ledit signal de sortie, par l'intermédiaire de moyens de commutations à au moins l'une desdites capacités (C1,C2) pour produire une force électrostatique de rétroaction,
      caractérisé en ce que lesdits moyens de circuits directs comprennent des moyens (7; 17) pour engendrer ledit signal sous une forme numérique modulée en densité d'impulsions en fonction de ladite force.

2.  Dispositif de mesure d'une force conforme à la revendication 1, caractérisé en ce que ledit capteur capacitif (1) contient un gaz pour amortir les mouvements de ladite lame mobile (2).

3.  Dispositif de mesure d'une force conforme à la revendication 1, caractérisé en ce que lesdits moyens de circuits directs comprennent au moins un intégrateur électronique (15, C13) situé après la sortie du capteur capacitif (1).

4.  Dispositif de mesure d'une force conforme à la revendication 3, caractérisé en ce que l'entrée dudit intégrateur (15,C13) est prévue pour recevoir une combinaison linéaire du signal en sortie dudit capteur capacitif (1) et dudit signal engendré sous une forme numérique, le signal de la fonction de transfert de la boucle de rétroaction ainsi formée de l'entrée dudit intégrateur à la sortie des moyens de circuits directs étant négative.

5.  Dispositif de mesure d'une force conforme à la revendication 1, caractérisé en ce que lesdits moyens (7; 17) pour engendrer ledit signal sous une forme numérique comprennent un comparateur à un bit.

6.  Dispositif de mesure d'une force conforme à la revendication 5, caractérisé en ce que lesdits moyens de circuits de rétroaction comprennent un filtre passe-bas (700) pour transformer ledit signal engendré sous forme numérique en un signal à valeurs multiples.

8

**7.** Dispositif de mesure d'une force conforme à la revendication 1, caractérisé en ce que lesdits moyens (7; 17) pour engendrer ledit signal sous une forme numérique comprennent un convertisseur multi-bits.

**8.** Dispositif de mesure d'une force conforme à la revendication 1, caractérisé en ce qu'il comprend des moyens globaux de compensation du décalage (110) pour fournir un signal calibré et pour ajouter ce signal calibré au signal dans lesdits moyens de circuits directs ou dans lesdits moyens de circuit de rétroaction.

# Fig.1

# Fig. 6

Fig. 2

$\nearrow$ = VP (ex. 5V)

$\downarrow$ = VN (ex. –5V)

$\perp$ = VC = $\dfrac{VP+VN}{2}$ (ex. 0V)

EP 0 590 658 A1

EP 0 590 658 A1

# Fig. 3

$$V28 = \frac{-C_1}{C_3}$$

$$V29 = \frac{-C_2}{C_4} \cdot \Delta V$$

déclenchement comparateur

$T_{mod}$

12

# Fig. 4

# Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 912 830  (TRITON TECHNOLOGIES INC.)<br>* Page 25, ligne 16 - page 26, ligne 32; figure 16 * & US-A-5134881 (Cat. D) | 1,5 | G 01 P  15/13 |
| Y | | 2 | |
| A | | 4 | |
| | --- | | |
| Y | US-A-4 930 043  (W.J. WIEGAND)<br>* Colonne 4, lignes 13-19; figure 1 * | 2 | |
| | --- | | |
| A | GB-A-1 583 536  (THE SINGER CO.)<br>* Page 6, ligne 20 - page 8, ligne 11; figure 3 * | 1,3-5 | |
| | --- | | |
| A | SENSORS AND ACTUATORS - A PHYSICAL, vol. A21-A23, no. 1/3, Février 1990, pages 316-319, Elsevier Sequoia; S. SUZUKI et al.: "Semiconductor capacitance-type accelerometer with PWM electrostatic servo technique"<br>* Page 316, colonne 2, lignes 2-22; figure 1 * | | |

DOMAINES TECHNIQUES RECHERCHES (Int. Cl.5)

G 01 P

Le présent rapport a été établi pour toutes les revendications

| Lieu de la recherche | Date d'achèvement de la recherche | Examinateur |
|---|---|---|
| LA HAYE | 05-01-1994 | HANSEN P G E |

EPO FORM 1503 03.82 (P0402)